# EUROPÄISCHE PATENTANMELDUNG

(11) **EP 2 151 909 A2**
(43) Veröffentlichungstag der Anmeldung: **10.02.2010**
(21) Anmeldenummer: 09009913.6
(22) Anmeldetag: 31.07.2009
(51) Int. Cl.: H02K 11/04

(54) **Antriebsbaugruppe für die motorische Verstellung eines Verstellelements in einem Kraftfahrzeug**

(30) Priorität: 08.08.2008 DE 102008036953; 24.10.2008 DE 102008053036
(71) Anmelder: Brose Fahrzeugteile GmbH & Co. Kommanditgesellschaft, Hallstadt, Max-Brose-Strasse 2 96103 Hallstadt (DE)
(72) Erfinder: Eberlein, Andre, 96450 Coburg (DE)
(74) Vertreter: Gottschald, Jan

(57) **Zusammenfassung**

Die Erfindung betrifft eine Antriebsbaugruppe für die motorische Verstellung eines Verstellelements in einem Kraftfahrzeug mit einem Gehäuse, einem im Gehäuse angeordneten elektrischen Antriebsmotor mit nachgeschaltetem Getriebe und einem im Gehäuse angeordneten elektrischen Steuermodul mit Leiterplatte, wobei der Antriebsmotor als Gleichstrommotor mit Antriebswelle, Kommutator und Bürstenhalter ausgestaltet ist, wobei der Bürstenhalter eine Kontaktanordnung für die elektrische Spannungsversorgung des Antriebsmotors aufweist. Es wird vorgeschlagen, dass für die elektrische Spannungsversorgung des Antriebsmotors die Kontaktanordnung des Bürstenhalters in elektrisch leitender Verbindung unmittelbar mit der Leiterplatte des Steuermoduls steht.

## Beschreibung

Die Erfindung betrifft eine Antriebsbaugruppe für die motorische Verstellung eines Verstellelements in einem Kraftfahrzeug gemäß dem Oberbegriff von Anspruch 1, eine Antriebsbaugruppe gemäß dem Oberbegriff von Anspruch 2 sowie ein Verfahren zur Montage einer solchen Antriebsbaugruppe gemäß dem Oberbegriff von Anspruch 14.

Die in Rede stehende Antriebseinheit ist auf alle möglichen Verstellelemente in einem Kraftfahrzeug anwendbar. Vorliegend steht die motorische Verstellung von Fenstern eines Kraftfahrzeugs im Vordergrund. Dies ist nicht beschränkend zu verstehen. Nur beispielhaft sei die motorische Verstellung von Außenspiegeln, Fabrzeugsitzen, Fahrzeugschlössern, Fahrzeugtüren, Fahrzeugklappen oder dergleichen genannt.

Die bekannte Antriebsbaugruppe (DE 101 41 244 A1), von der die Erfindung ausgeht, zeigt einen üblichen strukturellen Aufbau. Die Antriebsbaugruppe ist mit einem Gehäuse ausgestattet, in dem ein Antriebsmotor, ein dem Antriebsmotor nachgeschaltetes Getriebe und ein elektrisches Steuermodul mit Leiterplatte angeordnet ist. Bei dem Antriebsmotor handelt es sich um einen Gleichstrommotor, der die Komponenten Antriebswelle, Kommutator und Bürstenhalter aufweist. Das Getriebe ist als Schneckenradgetriebe ausgestaltet, wobei die Schnecke der Antriebswelle des Antriebsmotors und das Schneckenrad dem Abtrieb der Antriebsbaugruppe zugeordnet ist.

Einen ganz ähnlichen Aufbau zeigen die in der DE 20 2004 015 271 U1 und DE 103 18 062 A1 gezeigten Antriebsbaugruppen.

Von besonderer Bedeutung ist vorliegend die Kontaktierung des Bürstenhalters für die elektrische Spannungsversorgung des Antriebsmotors. Mittels des Bürstenhalters wird elektrische Spannung über die Bürsten und den Kommutator zu den Motorwicklungen geleitet. Die elektrische Spannung wird regelmäßig von dem elektrischen Steuermodul gesteuert. Entsprechend besteht eine elektrische Verbindung zwischen dem Steuermodul und dem Bürstenhalter. Dabei handelt es sich um eine lösbare Verbindung. Die Lösbarkeit der Verbindung ist notwendig, um die Montierbarkeit des Steuermoduls überhaupt gewährleisten zu können. Die Lösbarkeit ist aber auch vorteilhaft, wenn die Austauschbarkeit des Steuermoduls gefordert ist, beispielsweise um Varianten zu bilden.

Bei der bekannten Antriebsbaugruppe ist die lösbare Verbindung dadurch realisiert, dass der Bürstenhalter eine Kontaktanordnung aufweist, die in Eingriff mit am Steuermodul angeordneten, in einem Steckergehäuse untergebrachten Gabelkontakten bringbar ist.

Bei der bekannten Antriebsbaugruppe fällt auf, dass der Aufwand für die Kontaktierung des Bürstenhalters hoch ist. Dies liegt zum einen an der aufwendigen Kontaktierung mit den genannten, in einem Steckergehäuse untergebrachten Gabelkontakten. Dies liegt aber auch daran, dass der Ort der Kontaktierung, nämlich unmittelbar an der Ankerwelle des Antriebsmotors, zu aufwendigen Konstruktionen führt. Schließlich müssen die Gabelkontakte passgenau zum Bürstenhalter geführt werden.

Erwähnenswert ist bei der bekannten Antriebsbaugruppe ferner die Tatsache, dass das Steuermodul mit einem Sensor zur Erfassung der Drehzahl der Antriebswelle ausgestattet ist. Dieser Sensor ist auf einer Leiterplatte des Steuermoduls angeordnet, die sich bis zu einem auf der Antriebswelle angeordneten Ringmagneten hin erstreckt.

Insgesamt ist das Steuermodul mit der konstruktiven Umsetzung der Kontaktierung des Bürstenhalters einerseits und mit der konstruktiven Umsetzung der Sensoranordnung andererseits aufwendig und teuer.

Der Erfindung liegt das Problem zugrunde, die bekannte Antriebsbaugruppe derart auszugestalten und weiterzubilden, dass der konstruktive Aufwand für die Realisierung des Steuermoduls reduziert wird.

Das obige Problem wird bei einer Antriebsbaugruppe gemäß dem Oberbegriff von Anspruch 1 durch die Merkmale des kennzeichnenden Teils von Anspruch 1 gelöst.

Wesentlich ist die Erkenntnis, dass für die Kontaktierung des Bürstenhalters unmittelbar die Leiterplatte des Steuermoduls genutzt werden kann. Entsprechend ist es vorgesehen, dass die Kontaktanordnung des Bürstenhalters in elektrisch leitender Verbindung unmittelbar mit der Leiterplatte des Steuermoduls steht.

Mit der vorschlagsgemäßen Lösung wird die über viele Jahre verfolgte funktionale Trennung zwischen der Leiterplatte des Steuermoduls einerseits und der Kontaktierung des Bürstenhalters andererseits aufgebrochen. Durch den Wegfall von Gabelkontakten und dazugehörigen Steckergehäusen am Steuermodul lassen sich die Realisierungskosten erheblich reduzieren.

Nach einer weiteren Lehre, der ebenfalls eigenständige Bedeutung zukommt, wird das obige Problem bei einer Antriebsbaugruppe gemäß dem Oberbegriff von Anspruch 2 durch die Merkmale des kennzeichnenden Teils von Anspruch 2 gelöst.

Wesentlich ist nach dieser weiteren Lehre, dass eine Leiterplatte, deren Formgebung von der strengen ebenen Formgebung abweicht, ganz besondere Vorteile mit sich bringt Diese Vorteile gehen auf die Erkenntnis zurück, dass die Leiterplatte des Steuermoduls eine gewisse Erstreckung aufweisen muss, um den Bürstenhalter und/oder einen Ringmagneten oder dergleichen zu erreichen, was bei einer ebenen Ausgestaltung der Leiterplatte zu erheblichen Bauraumbeschränkungen führt.

Bei der vorschlagsgemäßen Abweichung von der ebenen Formgebung der Leiterplatte dagegen läßt sich der je nach konstruktiven Randbedingungen vorhandene Bauraum optimal ausnutzen.

Im Sinne einer leichten Fertigbarkeit und vor allem unter Kostengesichtspunkten wird vorgeschlagen, die Leiterplatte als starrflexible Leiterplatte auszugestalten, die mindestens zwei starre Teile aufweist, die durch einen vorzugsweise streifenförmigen flexiblen Bereich miteinander verbunden sind und die miteinander wie oben erläutert einen von 180° abweichenden Winkel einschließen. Wesentlich ist dabei die Tatsache, dass der flexible Bereich funktionell identisch zu den beiden starren Teilen ist. Dies bedeutet, dass über diesen flexiblen Bereich auch Leiterbahnen verlaufen.

Vorzugsweise ist das Getriebe als Schneckengetriebe ausgestaltet. Eine solche Ausgestaltung des Getriebes hat sich insbesondere bei Fensterheberantrieben bewährt.

Bei der bevorzugten Ausgestaltung gemäß Anspruch 5 ist die Leiterplatte für die elektrisch leitende Verbindung mit der Kontaktanordnung des Bürstenhalters unmittelbar an ihrer Oberfläche mit Kontaktfläche ausgestattet. Diese Kontaktflächen können im einfachsten Fall als Leiterbahnen der Leiterplatte ausgestaltet sein, die vorzugsweise in üblicher Weise im Ätzverfahren hergestellt sind.

Nach einer weiteren Lehre, der ebenfalls eigenständige Bedeutung zukommt, wird das obige Problem bei einem Verfahren gemäß dem Oberbegriff von Anspruch 14 durch die Merkmale des kennzeichnenden Teils von Anspruch 14 gelöst.

Dabei handelt es sich um ein Verfahren zur Montage der Antriebsbaugruppe, deren Steuermodul mit einer starrflexiblen Leiterplatte ausgestattet ist. Es ist vorgesehen, dass die Leiterplatte aus dem ebenen Zustand heraus an dem flexiblen Bereich geknickt wird, so dass die beiden starren Teile der Leiterplatte miteinander einen von 180° abweichenden Winkel einschließen.

Das vorschlagsgemäße Verfahren ist schnell und mit minimalem Aufwand umsetzbar.

Im Folgenden wird die Erfindung anhand von Ausführungsbeispielen näher erläutert. In der Zeichnung zeigt
- Fig. 1: eine vorschlagsgemäße Antriebsbaugruppe im vormontierten Zustand in einer schematischen, perspektivischen Darstellung,
- Fig. 2: die Antriebsbaugruppe gemäß Fig. 1 im montierten Zustand,
- Fig. 3: die Antriebsbaugruppe gemäß Fig. 2 in um 90° gedrehter Ansicht III bei unmontiertem Antriebsmotor,
- Fig. 4: die Leiterplatte eines Steuermoduls einer vorschlagsgemäßen Antriebsbaugruppe a) im ebenen Zustand und b) im geknickten Zustand,
- Fig. 5: eine vorschlagsgemäße Antriebsbaugruppe in einer weiteren Ausführungsform im vormontierten Zustand in einer schematischen perspektivischen Darstellung,
- Fig. 6: eine vorschlagsgemäße Antriebsbaugruppe in einer weiteren Ausführungsform im montierten Zustand in einer schematischen, teilweise geschnittenen, perspektivischen Darstellung und
- Fig. 7: die Antriebsbaugruppe gemäß Fig. 6 im vormontierten Zustand in einer perspektivischen Darstellung schräg von oben.

Die in der Zeichnung beispielhaft dargestellten, vorschlagsgemäßen Antriebsbaugruppen sind dem Anwendungsbereich der motorischen Fensterheber zuzurechnen. Dies ist nicht beschränkend zu verstehen. Insbesondere sind die im einleitenden Teil der Beschreibung genannten Bereiche im Zusammenhang mit der Erfindung vorteilhaft anwendbar.

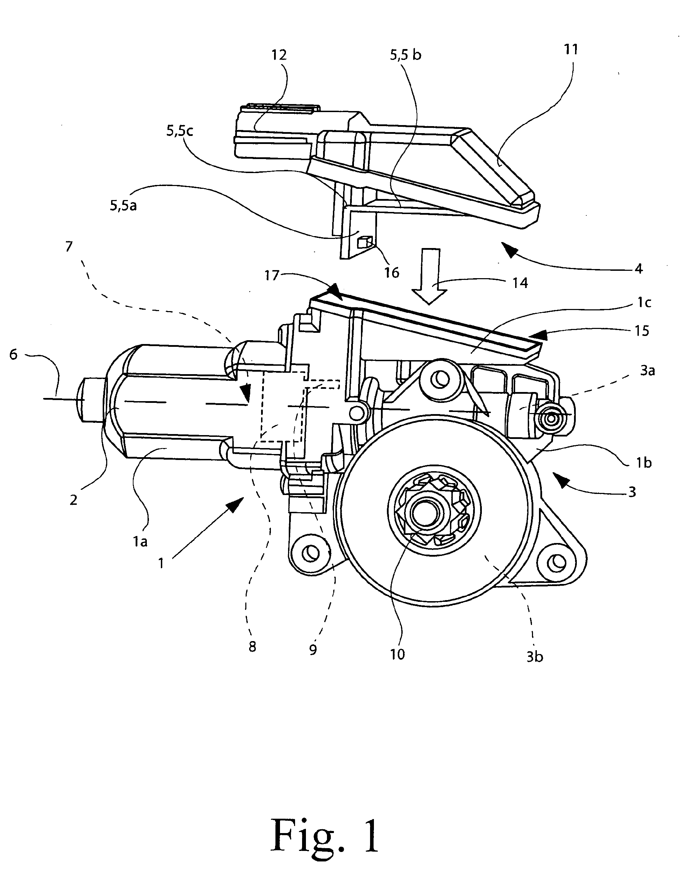

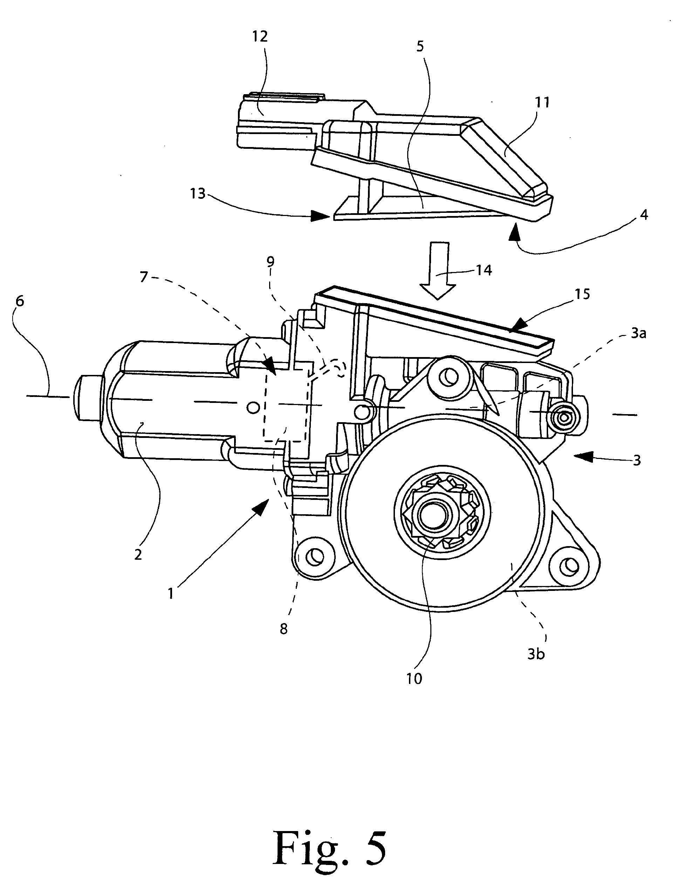

Die in den Fig. 1 bis 4 dargestellte Antriebsbaugruppe entspricht von ihrem grundsätzlichen Aufbau her der in Fig. 5 dargestellten Antriebsbaugruppe. Soweit die beiden Antriebsbaugruppen identisch sind, gelten alle folgenden Ausführungen für beide Ausgestaltungen gleichermaßen.

Die in Fig. 1 dargestellte Antriebsbaugruppe dient wie oben erläutert der motorischen Verstellung eines nicht dargestellten Verstellelements in einem Kraftfahrzeug. Die Antriebsbaugruppe ist mit einem Gehäuse 1 ausgestattet, das deren wesentlichen Komponenten aufnimmt. Das Gehäuse 1 kann einstückig, aber auch mehrstückig ausgestaltet sein. Bei dem Gehäuse 1 kann es sich grundsätzlich auch nur um einen Träger handeln. Entsprechend ist der Begriff "Gehäuse" weit auszulegen.

Im Gehäuse 1 angeordnet sind ein elektrischer Antriebsmotor 2 mit nachgeschaltetem Getriebe 3 sowie ein elektrisches Steuermodul 4, dem eine Leiterplatte 5 zugeordnet ist

Bei dem Steuermodul 4 kann es sich um eine Elektronik handeln, die in erster Linie der Steuerung und/oder Regelung des Antriebsmotors 2 dient. Denkbar ist auch ein Steuermodul 4, das in erster Linie der Auswertung der Signale eines noch zu erläuternden Sensors dient, wobei die Steuerung und/oder Regelung des Antriebsmotors 2 dann regelmäßig von einer übergeordneten Steueranordnung übernommen wird.

Grundsätzlich kann das Steuermodul 4 zusätzlich zu den oben genannten Funktionen auch weitere Funktionen übernehmen. Dazu gehören beispielsweise die Einbindung des Antriebsmotors 2 in ein Bussystem oder die Ansteuerung weiterer Kraftfahrzeugkomponenten wie Außenspiegel.

Der Antriebsmotor 2 ist als Gleichstrommotor mit den Komponenten Antriebswelle 6, Kommutator 7 und Bürstenhalter 8 ausgestaltet. Die Antriebswelle 6 ist in der Zeichnung nur als gestrichelte Linie angedeutet. Die Antriebswelle 6 umfasst einerseits die Ankerwelle als auch jede der Ankerwelle unmittelbar nachgeschaltete Verlängerung.

Auch die Komponenten Kommutator 7 und Bürstenhalter 8 sind in der Zeichnung nur angedeutet. Der grundsätzliche Aufbau dieser beiden Komponenten lässt sich der DE 101 41 244 A1 entnehmen, die auf die Anmelderin zurückgeht und die hiermit in vollem Umfange zum Gegenstand dieser Anmeldung gemacht wird, soweit die Anordnung und Ausgestaltung des Kommutators 7 und des Bürstenhalters 8 betroffen sind.

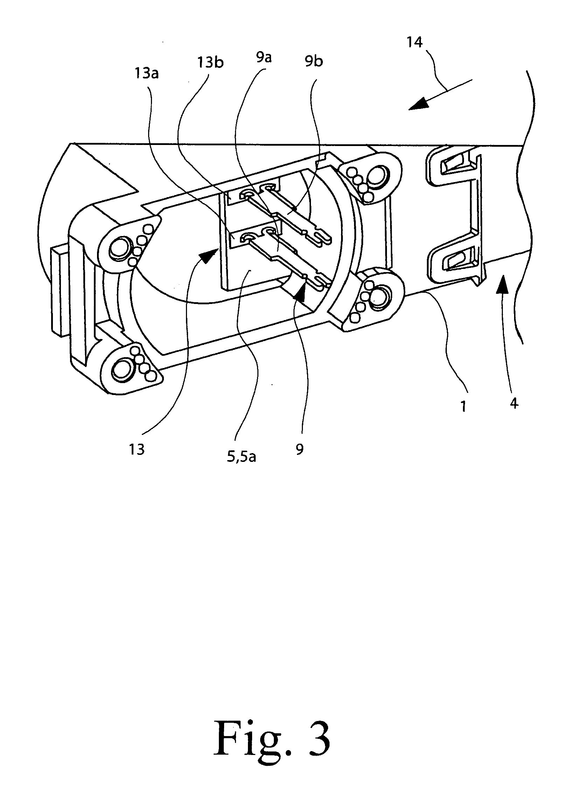

Einer Zusammenschau der Fig. 1 und 3 lässt sich entnehmen, dass der Bürstenhalter 8 eine Kontaktanordnung 9 für die elektrische Spannungsversorgung des Antriebsmotors 2 aufweist. Die Kontaktanordnung 9 besteht hier und vorzugsweise aus zwei Einzelkontakten 9a, 9b, mittels denen elektrische Spannung über die Bürsten und den Kommutator 7 auf die jeweils aktive Motorwicklung geleitet wird.

Besonders gut lässt sich der Darstellung in Fig. 3 die Tatsache entnehmen, dass für die elektrische Spannungsversorgung des Antriebsmotors 2 die Kontaktanordnung 9 des Bürstenhalters 8 in elektrisch leitender Verbindung unmittelbar mit der Leiterplatte 5 des Steuermoduls 4 steht.

Für das richtige Verständnis der Darstellung in Fig. 3 ist zu berücksichtigen, dass in Fig. 3 zwar der Antriebsmotor 2 und damit der wesentliche Teil des Bürstenhalters 8 fehlt. Dargestellt sind allerdings die Kontakte 9a, 9b der Kontaktanordnung 9 des Bürstenhalters 8, die in elektrischer Verbindung mit der Leiterplatte 5 des Steuermoduls 4 stehen. Entsprechend zeigt Fig. 3 jedenfalls einen Bestandteil des Bürstenhalters 8, nämlich die Kontakte 9a, 9b der Kontaktanordnung 9. Die Kontaktierung des Bürstenhalters 8 wird im Einzelnen weiter unten erläutert.

Hier und vorzugsweise ist die Leiterplatte 5 als starrflexible Leiterplatte, die mindestens zwei starre Teile 5a, 5b aufweist, ausgestaltet. Die beiden starren Teile 5a, 5b sind durch einen vorzugsweise streifenförmigen flexiblen Bereich 5c miteinander verbunden und schließen - im montierten Zustand - miteinander einen von 180° abweichenden Winkel ein. Denkbar ist, dass die beiden starren Teile 5a, 5b im noch nicht montierten Zustand über eine Sollbruchstelle miteinander mechanisch verbunden sind, die eine einfache, vorzugsweise gleichzeitige Bestückung der beiden Teile 5a, 5b mit elektronischen Bauelementen erlaubt.

Die Ausgestaltung der Leiterplatte 5 als solche ist auch Gegenstand einer weiteren Lehre, der eigenständige Bedeutung zukommt.

Starrflexible Leiterplatten sind heute vornehmlich in zwei unterschiedlichen Ausprägungen bekannt.

Bei der sogenannten Semiflex-Leiterplatte, die vorliegend bevorzugt Anwendung findet, wird zur Erzeugung des flexiblen Bereichs das Trägermaterial der Leiterplatte auf eine geringe Stärke abgefräst, so dass ein Verschwenken der starren Teile gegeneinander möglich ist. Dies ist eine besonders kostengünstige Realisierung einer starrflexiblen Leiterplatte

Bei der sogenannten Multiflex-Leiterplatte dagegen ist eine flexible Trägerfolie vorgesehen, die sich über die gesamte Fläche der Leiterplatte erstreckt und die auch den flexiblen Bereich bereitstellt. Hiermit lassen sich bei geeigneter Auslegung sehr kleine Biegeradien erzeugen.

Je nach konstruktiven Randbedingungen können unterschiedliche Winkel zwischen den beiden starren Teilen 5a, 5b vorgesehen sein. Hier handelt es sich bei diesem Winkel insbesondere um einen Winkel von etwa 90°. Weitere konstruktive Details hierzu werden weiter unten erläutert.

Der strukturelle Aufbau der dargestellten Ausführungsbeispiele ist im Hinblick auf die vorschlagsgemäßen Lehren ganz besonders vorteilhaft. Hier ist das dem Antriebsmotor 2 nachgeschaltete Getriebe 3 als Schneckengetriebe ausgestaltet, wobei die Schnecke 3a auf der Antriebswelle 6 angeordnet ist und das Schneckenrad 3b den Abtrieb 10 der Antriebsbaugruppe bereitstellt. Für die grundsätzliche Anordnung dieser Komponenten darf wieder auf die DE 101 41 244 A1 verwiesen werden, deren Inhalt auch insoweit zum Gegenstand der vorliegenden Anmeldung gemacht wird.

Bei den dargestellten Ausführungsbeispielen ist es ferner so, dass der Antriebsmotor 2, das Getriebe 3 und das Steuermodul 4 im wesentlichen in einer Ebene angeordnet sind. Dies führt insbesondere im Hinblick auf die Montage der Antriebsbaugruppe in einer Kraftfahrzeugtür zu einer optimalen Bauraumausnutzung, da die Anordnung insgesamt besonders flach ausfällt.

Das Steuermodul 4 ist zumindest zum Teil, vorzugsweise vollständig, in einem seitlichen Abstand zu der Antriebswelle 6 angeordnet. Dabei kann das Steuermodul 4, in Richtung der Antriebswelle 6 gesehen, auf der Höhe des Antriebsmotors 2 oder auf der Höhe des Getriebes 3, oder eben dazwischen angeordnet sein. In jedem Fall muss dafür gesorgt werden, dass das Steuermodul 4 den im Bereich der Antriebswelle 6 angeordneten Bürstenhalter 8 kontaktieren kann. Hierfür muss ein im Hinblick auf die Antriebswelle 6 radialer Abstand überbrückt werden. Dies lässt sich durch die vorschlagsgemäße Lösung leicht realisieren, wie noch gezeigt wird.

Das Steuermodul 4 ist bezogen auf die Antriebswelle 6 vorzugsweise gegenüberliegend zu dem Schneckenrad 3b angeordnet. Im Hinblick auf die oben angesprochene, flache Ausgestaltung der Antriebsbaugruppe insgesamt ist diese Anordnung des Steuermoduls 4 besonders vorteilhaft.

Hier und vorzugsweise ist das Gehäuse 1 in einzelne Gehäuseabschnitte 1a, 1b, 1c unterteilt, die dem Antriebsmotor 2, dem Getriebe 3 und dem Steuermodul 4 zugeordnet sind. Der dem Antriebsmotor 2 zugeordnete Gehäuseabschnitt 1a ist separat und trennbar von den übrigen Gehäuseabschnitten 1b, 1c ausgebildet. Dieser Gehäuseabschnitt ist hier und vorzugsweise als Poltopf des elektrischen Antriebsmotors 2 ausgestaltet.

Denkbar ist auch ein komplett einstückiges Gehäuse, soweit dies die Montierbarkeit der Antriebsbaugruppe zulässt.

Von besonderer Bedeutung ist vorliegend die Tatsache, dass der Gehäuseabschnitt 1c des Steuermoduls 4 mit einem Deckel 11 abgeschlossen ist, wobei der Deckel 11 weiter vorzugsweise einen Stecker 12 für den elektrischen Anschluss der Antriebsbaugruppe aufweist. Der Stecker 12 stellt eine Verbindung zu einer übergeordneten Steuerung oder schlicht zu der Spannungsversorgung des Kraftfahrzeugs bereit. Die Leiterplatte 5 wird vorzugsweise in dem Deckel 11 vormontiert und gemeinsam mit dem Deckel 11 in das Gehäuse 1 im übrigen eingesetzt. Dies wird im Zusammenhang mit dem vorschlagsgemäßen Verfahren noch erläutert.

Für die Realisierung der Kontaktierung des Bürstenhalters 8 sind eine Reihe von Möglichkeiten denkbar.

Eine besonders einfach zu realisierende Variante besteht darin, dass für die elektrisch leitende Verbindung mit der Kontaktanordnung 9 des Bürstenhalters 8 die Leiterplatte 5 unmittelbar an ihrer Oberfläche, insbesondere an einem Ende der Leiterplatte 5, Kontaktflächen 13a, 13b aufweist, die ebenfalls eine Kontaktanordnung 13 bilden. Die Kontaktflächen 13a, 13b sind in Fig. 3 dargestellt.

Eine fertigungstechnisch vorteilhafte Variante besteht darin, dass die Kontaktflächen 13a, 13b als Leiterbahnen der Leiterplatte 5 ausgestaltet sind. Die Kontaktflächen 13a, 13b können dann in einem einzigen Fertigungsschritt, vorzugsweise im Ätzverfahren, zusammen mit den übrigen Leiterbahnen der Leiterplatte 5 hergestellt werden. Denkbar ist aber auch, dass die Kontaktflächen 13a, 13b auf die Oberfläche der Leiterplatte 5 aufgedampft oder aufgeklebt sind.

Die Kontaktanordnung 9 des Bürstenhalters 8 ist vorzugsweise mit Federkontakten 9a, 9b ausgestattet, die mit den zugeordneten Kontaktflächen 13a, 13b der Leiterplatte 5 in leitender Verbindung stehen. Auch dies ist der Darstellung in Fig. 3 zu entnehmen.

Die Federkontakte 9a, 9b weisen vorzugsweise an ihren den Kontaktflächen 13a, 13b zugewandten Enden Ausformungen auf, die durch ihre Eigenelastizität federnd auf die Kontaktflächen 13a, 13b drücken. Hier und vorzugsweise werden diese Ausformungen durch zwei Bögen gebildet, die jeweils über einen Bogenabschnitt in Eingriff mit den Kontaktflächen 13a, 13b stehen. Es kann auch nur ein Bogen oder aber eine Mehrzahl von Bögen vorgesehen sein.

Die Anordnung ist nun so getroffen, dass zur Montage das Steuermodul 4 in einer Montagebewegung 14 in eine Aufnahme 15 einsetzbar ist und dass dabei die Kontaktflächen 13a, 13b in Eingriff mit den zugeordneten Federkontakten 9a, 9b des Bürstenhalters 8 kommen. Dabei ist die Montagebewegung vorzugsweise im wesentlichen senkrecht zu der Antriebswelle 6 des Antriebsmotors 2 ausgerichtet.

Die Federkraft der Federkontakte 9a, 9b ist dagegen im wesentlichen parallel zu der Antriebswelle 6 ausgerichtet, so dass bei der Montage des Steuermoduls 4 die Kontaktflächen 13a, 13b geringfügig an den Federkontakten 9a, 9b vorbeischleifen.

An dem Ende der Leiterplatte 5, das die Kontaktflächen 13a, 13b aufweist, ist vorzugsweise auch ein Sensor 16 zur Messung der Drehbewegung der Antriebswelle 6 vorgesehen. Dies führt zu einer Doppelnutzung der Leiterplatte 5, die per se mit einer entsprechenden Reduzierung der Kosten verbunden ist. Bei dem Sensor 16 kann es sich beispielsweise um einen Hall-Sensor handeln, der einem auf der Antriebswelle 6 angeordneten Magnetring zugeordnet ist.

Grundsätzlich kann es sich bei der Leiterplatte 5 um eine durchgängig starre Leiterplatte handeln, die nicht, wie oben erläutert, starrflexibel ausgestaltet ist. Dann ist es vorzugsweise so, dass die Leiterplatte 5 länglich ausgestaltet ist und neben der Antriebswelle 6 verläuft, wobei die Leiterplatte 5 an einem ihrer Enden die der Kontaktanordnung 9 des Bürstenhalters 8 zugeordneten Kontaktflächen 13a, 13b aufweist. Um die oben angesprochene Überbrückung des radialen Abstands für die Kontaktierung des Bürstenhalters 8 zu gewährleisten, ist es weiter vorzugsweise vorgesehen, dass die Leiterplatte 5 bezogen auf die Antriebswelle 6 zumindest geringfügig angestellt ist. Dies ist bei der in Fig. 5 dargestellten Ausführungsform angedeutet.

Die in Fig. 5 dargestellte Ausführungsform zeigt weiter, dass auch die Kontaktanordnung 9 des Bürstenhalters 8 bezogen auf die Antriebswelle 6 angestellt ist, wodurch bereits ein Teil des obigen radialen Abstands überbrückt wird. Auch hier ist die Kontaktanordnung 9 mit Federkontakten 9a, 9b ausgestattet. Die Federkraft wirkt hier im wesentlichen senkrecht zu der Antriebswelle 6.

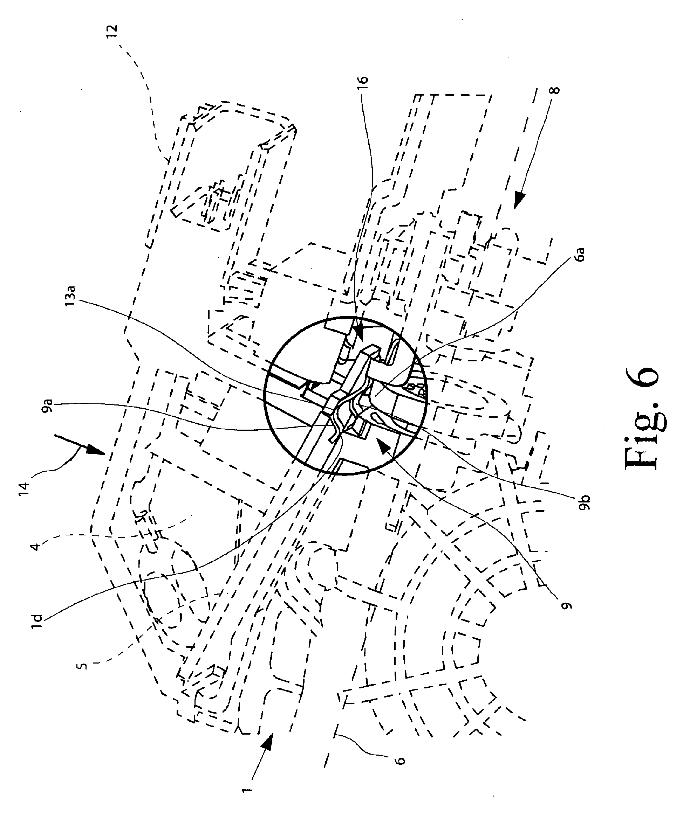

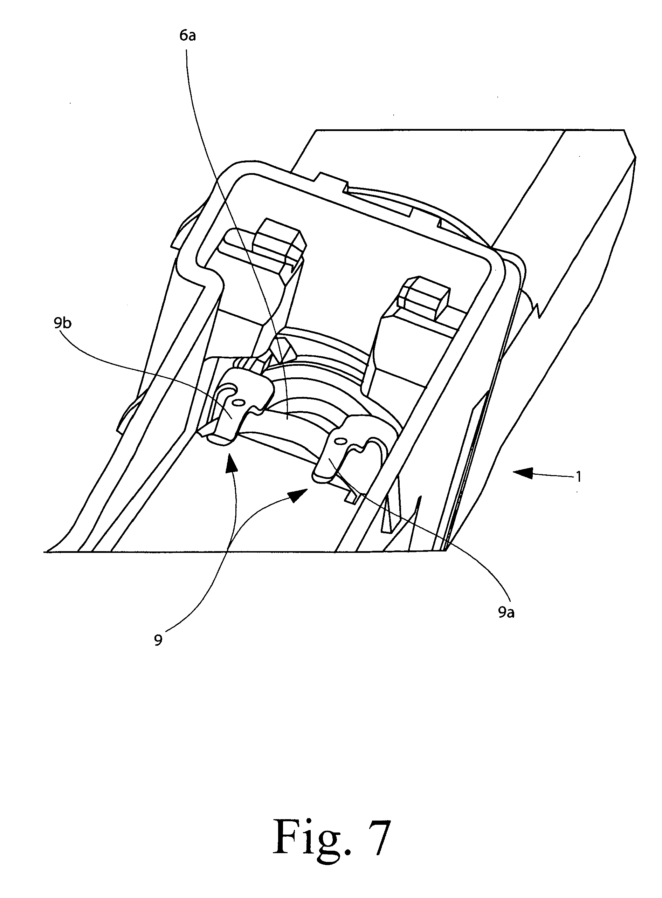

Eine weitere bevorzugte Ausführungsform mit vorzugsweise durchgängig starrer Leiterplatte 5 ist in den Fig. 6 und 7 dargestellt. Der grundsätzliche Aufbau dieser Ausführungsform entspricht dem Aufbau der in Fig. 5 dargestellten Ausführungsform. Insoweit darf auf die obigen Ausführungen verwiesen werden. Auch hier ist es so, dass die Leiterplatte 5 bezogen auf die Antriebswelle 6 angestellt ist. An einem ihrer Enden weist die Leiterplatte 5 die der Kontaktanordnung 9 des Bürstenhalters 8 zugeordneten Kontaktflächen 13a, 13b auf.

Hier und vorzugsweise sind Federkontakte 9a, 9b vorgesehen, die im montierten Zustand auf die zugeordneten Kontaktflächen 13a, 13b der Leiterplatte 5 drücken. Dabei ist es weiter vorzugsweise so, dass die Federkraft der Federkontakte 9a, 9b der Kontaktanordnung 9 zumindest dem letzten Teil der Montagebewegung 14 im wesentlichen entgegengerichtet ist. Dies ist insoweit vorteilhaft, als ein Schleifen der Federkontakte 9a, 9b auf den Kontaktflächen 13a, 13b während der Montagebewegung 14 nicht auftritt. Ein solches Schleifen kann zu einer Beschädigung der Kontaktflächen 13a, 13b führen.

In besonders bevorzugter Ausgestaltung kommen bei der Montage die Kontaktflächen 13a, 13b der Leiterplatte 5 in Eingriff mit den zugeordneten Federkontakten 9a, 9b des Bürstenhalters 8, wodurch die Federkontakte 9a, 9b in Richtung der Montagebewegung 14 einfedern. Eine Zusammenschau der Fig. 6 und 7 zeigt, dass die Federkontakte 9a, 9b ein federndes Auflager für die Leiterplatte 5 bilden.

Interessant ist bei der in den Fig. 6 und 7 dargestellten Ausführungsform die Tatsache, dass sich die Federkontakte 9a, 9b im montierten Zustand zumindest zum Teil, hier einseitig, am Gehäuse 1 abstützen. Die Abstützstelle 1d ist hier und vorzugsweise Bestandteil eines Absatzes im Gehäuse 1, auf den die Federkontakte 9a, 9b bei der Montage des Bürstenhalters 8 und/oder des Antriebsmotors 2 aufgeschoben werden. Dies ist montagetechnisch vorteilhaft.

Es sind eine Reihe von Möglichkeiten denkbar, die Federwirkung der Federkontakte 9a, 9b zu realisieren. Hier und vorzugsweise sind die Federkontakte 9a, 9b als vorzugsweise streifenförmige Federbleche ausgestaltet, die einerends in den Bürstenhalter 8 im übrigen übergehen und die sich anderenends an der Abstützstelle 1d am Gehäuse 1 abstützen. Die Federkontakte 9a, 9b folgen einer Bogenform um die Federwirkung weiter zu erhöhen.

Es wurde schon darauf hingewiesen, dass die Leiterplatte 5 vorteilhafterweise mit einem Sensor 16 ausgestattet ist, der weiter vorzugsweise einem auf der Antriebswelle 6 angeordneten Magnetring 6a zugeordnet ist. Bei allen dargestellten Ausführungsbeispielen ist es in diesem Zusammenhang vorzugsweise so, dass der Sensor 16 der Leiterplatte 5 im Bereich der Kontaktflächen 13a, 13b angeordnet ist.

Eine im Zusammenhang mit dem obigen Sensor 16 nennenswerte Besonderheit ist den Darstellungen in den Fig. 6 und 7 zu entnehmen. Hier erstrecken sich die Federkontakte 9a, 9b vom motorseitigen Teil des Bürstenhalters 8 ausgehend im wesentlichen entlang der Antriebswelle 6 über den Magnetring 6a hinweg zu der Abstützstelle 1d am Gehäuse 1. Diese sehr knappe "Überbrückung" des Magnetrings 6a durch die Federkontakte 9a, 9b ist nur durch die obige Abstützung der Federkontakte 9a, 9b an der Abstützstelle 1d am Gehäuse 1 möglich und führt insgesamt zu einer besonders kompakten Anordnung.

Je nach Ausgestaltung des Gehäuses 1 können unterschiedliche Anstellwinkel für die Leiterplatte 5 vorgesehen sein. Grundsätzlich ist es aber auch denkbar, dass die Leiterplatte 5 im wesentlichen parallel zu der Antriebwelle 6 verläuft.

Entsprechend gelten alle obigen Ausführungen zu einer angestellten Leiterplatte 5 in vollem Umfange auch für eine in obiger Weise parallel angeordnete Leiterplatte 5.

Auf ein Anstellen der Leiterplatte 5 kann grundsätzlich auch verzichtet werden, wenn, wie weiter oben vorgeschlagen, eine starrflexible Leiterplatte 5 zum Einsatz kommt. Dies ist in den Fig. 1 bis 4 dargestellt.

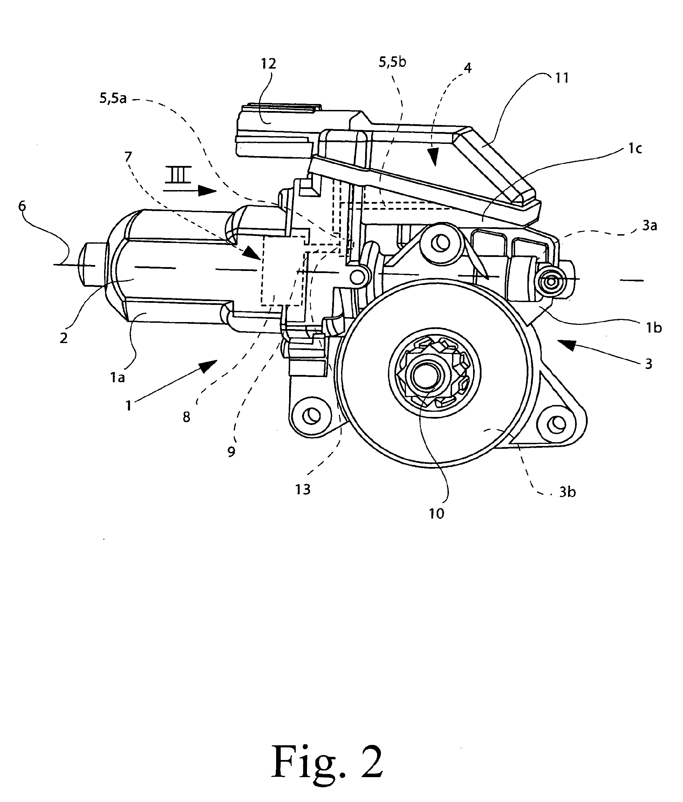

Hier und vorzugsweise ist die Leiterplatte 5 mit dem einen starren Teil 5a im wesentlichen senkrecht zu der Antriebswelle 6 ausgerichtet, während weiter vorzugsweise die Leiterplatte 5 mit dem anderen starren Teil 5b im wesentlichen parallel zu der Antriebswelle 6 ausgerichtet ist. Diese Anordnung der Leiterplatte 5 in einem rechten Winkel führt zu einer optimalen Bauraumausnutzung innerhalb des Gehäuses 1, wie beispielsweise der Darstellung in Fig. 2 zu entnehmen ist.

In besonders bevorzugter Ausgestaltung ist es so, dass der im wesentlichen senkrecht zu der Antriebswelle 6 ausgerichtete Teil 5a der Leiterplatte 5 die der Kontaktanordnung 9 des Bürstenhalters 8 zugeordneten Kontaktflächen 13a, 13b aufweist. Dies ist sachgerecht, da durch die Ausrichtung des starren Teils 5a die Überbrückung des obigen radialen Abstands ohne Aufwand realisierbar ist. Alternativ oder zusätzlich kann es vorgesehen sein, dass der im wesentlichen senkrecht zu der Antriebswelle 6 ausgerichtete Teil 5a einen Sensor 16 zur Erfassung der Drehbewegung der Antriebswelle 6 aufweist. Dies führt zu einer Doppelnutzung des starren Teils 5a der Leiterplatte 5, die wie erläutert mit einer Reduzierung der Kosten verbunden ist.

Der im wesentlichen senkrecht zu der Antriebswelle 6 ausgerichtete Teil 5a der Leiterplatte 5 ist weiter vorzugsweise in einer Führung 17 angeordnet, um die von der Kontaktanordnung 9 des Bürstenhalters 8 auf die Kontaktflächen 13a, 13b wirkenden Kräfte aufzunehmen. Die Führung 17 ist vorzugsweise als Bestandteil des Gehäuses 1, insbesondere des Gehäuseabschnitts 1c, ausgestaltet. Die Führung 17 kann in Form eines Absatzes, einer Nut oder dergleichen, ein- oder beidseitig der Leiterplatte 5 vorgesehen sein.

Nach einer weiteren Lehre, der ebenfalls eigenständige Bedeutung zukommt, wird ein Verfahren zur Montage der in den Fig. 1 bis 4 dargestellten Antriebsbaugruppe beansprucht.

Bei dem obigen Verfahren ist es zunächst vorgesehen, dass nach der Montage des Bürstenhalters 8 das Steuermodul 4 mit Leiterplatte 5 in das Gehäuse 1 eingesetzt wird.

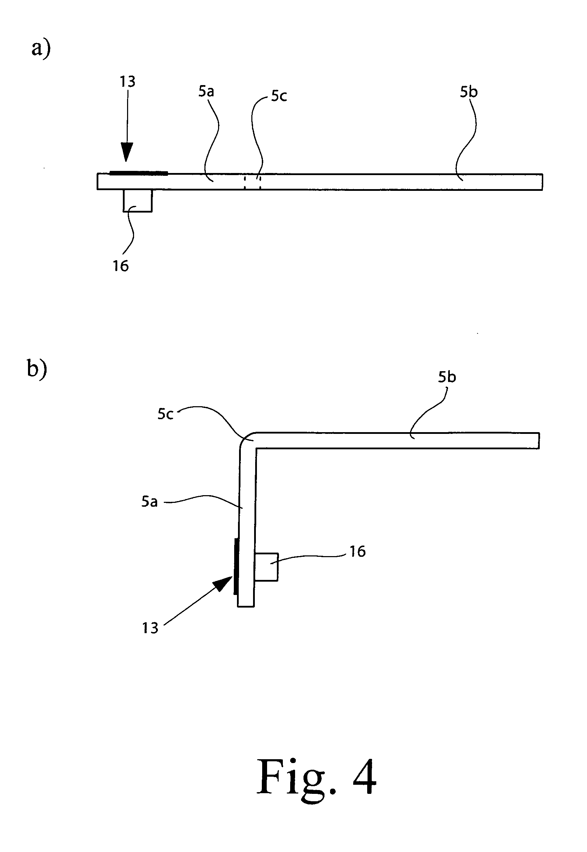

Wesentlich bei dem obigen Verfahren ist die Tatsache, dass die Leiterplatte 5 als starrflexible Leiterplatte ausgestaltet ist und mindestens zwei starre Teile 5a, 5b aufweist, die durch einen vorzugsweise streifenförmigen flexiblen Bereich 5c miteinander verbunden sind. Vor der Montage der Leiterplatte 5 werden die beiden starren Teile 5a, 5b der Leiterplatte 5 um den flexiblen Bereich 5c derart gegeneinander verschwenkt bzw. verknickt, dass sie miteinander einen von 180° abweichenden Winkel, hier und vorzugsweise einen Winkel von etwa 90°, einschließen. Eine ggf. vorhandene, oben angesprochene Sollbruchstelle zwischen den beiden starren Teilen 5a, 5b bricht bei diesem Verschwenken bzw. Verknicken entsprechend. Das Verschwenken der beiden starren Teile 5a, 5b der Leiterplatte 5 gegeneinander wird aus einer Zusammenschau der Fig. 4a) und 4b) deutlich.

Zur Montage wird das Steuermodul 4 dann vorzugsweise in die Aufnahme 15 eingesetzt, wobei, wie oben erläutert, ein starrer Teil 5a der Leiterplatte 5 im wesentlichen senkrecht zu der Antriebswelle 6 ausgerichtet ist und wobei, vorzugsweise, der andere starre Teil 5b der Leiterplatte 5 im wesentlichen parallel zu der Antriebswelle 6 ausgerichtet ist.

Beim Einsetzen der Leiterplatte 5 kommen schließlich die Kontaktflächen 13a, 13b der Leiterplatte 5 in Eingriff mit der Kontaktanordnung 9 des Bürstenhalters 8, wie ebenfalls oben erläutert wurde.

Bei den dargestellten und insoweit bevorzugten Ausführungsbeispielen ist die Leiterplatte 5 während des oben genannten Einsetzens in die Aufnahme 15 in dem Deckel 11 angeordnet. Streng genommen geht dem Einsetzen der Leiterplatte 5 in die Aufnahme 15 also das Einsetzen der Leiterplatte 5 in den Deckel 11 voraus.

Schließlich darf noch darauf hingewiesen werden, dass die bezogen auf die Antriebswelle 6 angestellte, also schräge Anordnung der Leiterplatte 5 auch vorteilhaft bei der im einleitenden Teil erläuterten, bekannten Verbindung zwischen dem Steuermodul 5 und dem Bürstenhalter 8 einsetzbar ist. Bei dieser Verbindung handelt es sich vorteilhafterweise um eine Verbindung mit Gabelkontakten. Diese Ausgestaltung einer Antriebsbaugruppe soll vorliegend auch als solche beanspruchbar sein.

## Patentansprüche

1. Antriebsbaugruppe für die motorische Verstellung eines Verstellelements in einem Kraftfahrzeug mit einem Gehäuse (1), einem im Gehäuse (1) angeordneten elektrischen Antriebsmotor (2) mit nachgeschaltetem Getriebe (3) und einem im Gehäuse (1) angeordneten elektrischen Steuermodul (4) mit Leiterplatte (5), wobei der Antriebsmotor (2) als Gleichstrommotor mit Antriebswelle (6), Kommutator (7) und Bürstenhalter (8) ausgestaltet ist, wobei der Bürstenhalter (8) eine Kontaktanordnung (9) für die elektrische Spannungsversorgung des Antriebsmotors (2) aufweist,
**dadurch gekennzeichnet,**
**dass** für die elektrische Spannungsversorgung des Antriebsmotors (2) die Kontaktanordnung (9) des Bürstenhalters (8) in elektrisch leitender Verbindung unmittelbar mit der Leiterplatte (5) des Steuermoduls (4) steht.

2. Antriebsbaugruppe für die motorische Verstellung eines Verstellelements in einem Kraftfahrzeug mit einem Gehäuse (1), einem im Gehäuse (1) angeordneten elektrischen Antriebsmotor (2) mit nachgeschaltetem Getriebe (3) und einem im Gehäuse (1) angeordneten elektrischen Steuermodul (4) mit Leiterplatte (8), wobei der Antriebsmotor (2) als Gleichstrommotor mit Antriebswelle (6), Kommutator (7) und Bürstenhalter (8) ausgestaltet ist, wobei der Bürstenhalter (8) eine Kontaktanordnung (9) für die elektrische Spannungsversorgung des Antriebsmotors (2) aufweist,
insbesondere nach Anspruch 1,
**dadurch gekennzeichnet,**
**dass** die Leiterplatte (5) als starrflexible Leiterplatte, insbesondere als Semiflex-Leiterplatte, ausgestaltet ist und mindestens zwei starre Teile (5a, 5b) aufweist, die durch einen vorzugsweise streifenförmigen flexiblen Bereich miteinander verbunden sind und die miteinander einen von 180° abweichenden Winkel, insbesondere einen Winkel von etwa 90°, einschließen.

3. Antriebsbaugruppe nach Anspruch 1 oder 2, **dadurch gekennzeichnet, dass** die Antriebsbaugruppe der motorischen Verstellung eines Fahrzeugfensters, eines Außenspiegels, eines Fahrzeugsitzes, eines Fahrzeugschlosses, einer Fahrzeugtür oder einer Fahrzeugklappe dient.

4. Antriebsbaugruppe nach einem der vorhergehenden Ansprüche, **dadurch gekennzeichnet, dass** das Gehäuse (1) einzelne Gehäuseabschnitte (1a, 1b, lc) für den Antriebsmotor (2) und/oder für das Getriebe (3) und/oder für das Steuermodul (4) aufweist, vorzugsweise, dass der Gehäuseabschnitt (1a) des Steuermoduls (4) mit einem Deckel (11) abgeschlossen ist, vorzugsweise, dass der Deckel (11) einen Stecker (12) für den elektrischen Anschluß der Antriebsbaugruppe aufweist.

5. Antriebsbaugruppe nach Anspruch 1 und ggf. nach einem der Ansprüche 2 bis 4, **dadurch gekennzeichnet, dass** für die elektrisch leitende Verbindung mit der Kontaktanordnung (9) des Bürstenhalters (8) die Leiterplatte (5) unmittelbar an ihrer Oberfläche Kontaktflächen (13a, 13b) aufweist, vorzugsweise, dass die Kontaktflächen (13a, 13b) als Leiterbahnen der Leiterplatte (5) ausgestaltet sind, oder, dass die Kontaktflächen (13a, 13b) auf die Oberfläche der Leiterplatte (5) aufgedampft oder aufgeklebt sind.

6. Antriebsbaugruppe nach Anspruch 5, **dadurch gekennzeichnet, dass** die Kontaktanordnung (9) des Bürstenhalters (8) Federkontakte (9a, 9b) aufweist, die mit den zugeordneten Kontaktflächen (13a, 13b) der Leiterplatte (5) in leitender Verbindung stehen, vorzugsweise dass die Anordnung so getroffen ist, dass zur Montage das Steuermodul (4) in einer Montagebewegung (14) in eine Aufnahme (15) einsetzbar ist und dass dabei die Kontaktflächen (13a, 13b) in Eingriff mit den zugeordneten Federkontakten (9a, 9b) des Bürstenhalters (8) kommen, vorzugsweise, dass die Montagebewegung (14) im wesentlichen senkrecht zu der Antriebswelle (6) des Antriebsmotors (2) ausgerichtet ist.

7. Antriebsbaugruppe nach Anspruch 5 und ggf. nach Anspruch 6, **dadurch gekennzeichnet, dass** die Leiterplatte (5) als durchgängig starre Leiterplatte ausgestaltet ist.

8. Antriebsbaugruppe nach Anspruch 5 und ggf. nach Anspruch 6 oder 7, **dadurch gekennzeichnet, dass** die Leiterplatte (5) länglich ausgestaltet ist und neben der Antriebswelle (6) verläuft, dass die Leiterplatte (5) an einem ihrer Enden die der Kontaktanordnung (9) des Bürstenhalters (8) zugeordneten Kontaktflächen (13a, 13b) aufweist.

9. Antriebsbaugruppe nach Anspruch 8, **danach gekennzeichnet, dass** die Leiterplatte (5) bezogen auf die Antriebswelle (6) angestellt ist.

10. Antriebsbaugruppe nach Anspruch 6 und ggf. nach einem der Ansprüche 7 bis 9, **dadurch gekennzeichnet, dass** die Federkraft der Federkontakte (9a, 9b) der Kontaktanordnung (9) zumindest dem letzten Teil der Montagebewegung (14) im wesentlichen entgegengerichtet ist.

11. Antriebsbaugruppe nach Anspruch 6 und ggf. nach einem der Ansprüche 7 bis 10, **dadurch gekennzeichnet, dass** bei der Montage die Kontaktflächen (13a, 13b) der Leiterplatte (5) in Eingriff mit den zugeordneten Federkontakten (9a, 9b) des Bürstenhalters (8) kommen und die Federkontakte (9a, 9b) in Richtung der Montagebewegung (14) einfedern, vorzugsweise, dass sich die Federkontakte (9a, 9b) im montierten Zustand zumindest zum Teil am Gehäuse (1) abstützen.

12. Antriebsbaugruppe nach Anspruch 6 und ggf. nach einem der Ansprüche 7 bis 11, **dadurch gekennzeichnet, dass** die Federkontakte (9a, 9b) als vorzugsweise streifenförmige Federbleche ausgestaltet sind, die einerends in den Bürstenhalter (8) im übrigen übergehen und die sich anderenends an einer Abstützstelle (1d) am Gehäuse (1) abstützen.

13. Antriebsbaugruppe nach Anspruch 6 und ggf. nach einem der Ansprüche 7 bis 12, **dadurch gekennzeichnet, dass** die Leiterplatte (5) im Bereich der Kontaktflächen (13a, 13b) einen Sensor (16) zur Erfassung der Drehbewegung der Antriebswelle (6) aufweist, vorzugsweise, dass dem Sensor (16) ein auf der Antriebswelle (6) angeordneter Magnetring (6a) zugeordnet ist, vorzugsweise, dass sich die Federkontakte (9a, 9b) vom motorseitigen Teil des Bürstenhalters (8) ausgehend im wesentlichen entlang der Antriebswelle (6) über den Magnetring (6a) hinweg zu der Abstützstelle (1d) am Gehäuse (1) hin erstrecken.

14. Verfahren zur Montage einer Antriebsbaugruppe für die motorische Verstellung eines Verstellelements in einem Kraftfahrzeug, insbesondere einer Antriebsbaugruppe nach einem der vorhergehenden Ansprüche, wobei die Antriebsbaugruppe ein Gehäuse (1), einen im Gehäuse (1) angeordneten elektrischen Antriebsmotor (2) mit nachgeschaltetem Getriebe (3) und ein im Gehäuse (1) angeordnetes elektrisches Steuermodul (4) mit Leiterplatte (5) aufweist, wobei der Antriebsmotor (2) als Gleichstrommotor mit Antriebswelle (6), Kommutator (7) und Bürstenhalter (8) ausgestaltet ist, wobei der Bürstenhalter (8) eine Kontaktanordnung (9) für die elektrische Spannungsversorgung des Antriebsmotors (2) aufweist, wobei nach der Montage des Bürstenhalters (8) das Steuermodul (4) mit Leiterplatte (5) in das Gehäuse (1) eingesetzt wird,
**dadurch gekennzeichnet,**
**dass** die Leiterplatte (5) als starrflexible Leiterplatte, insbesondere als Semiflex-Leiterplatte, ausgestaltet ist und mindestens zwei starre Teile (5a, 5b) aufweist, die durch einen vorzugsweise streifenförmigen flexiblen Bereich (5c) miteinander verbunden sind und dass vor der Montage der Leiterplatte (5) die beiden starren Teile (5a, 5b) der Leiterplatte (5) um den flexiblen Bereich (5c) derart gegeneinander verschwenkt werden, dass sie miteinander einen von 180° abweichenden Winkel, insbesondere einen Winkel von etwa 90°, einschließen.

15. Verfahren nach Anspruch 14, **dadurch gekennzeichnet, dass** bei dem Verschwenken der beiden starren Teile (5a, 5b) der Leiterplatte (5) gegeneinander eine Sollbruchstelle bricht, die die beiden starren Teile (5a, 5b) zuvor mechanisch verbunden hat.
